# EUROPEAN PATENT SPECIFICATION

(11) **EP 3 728 895 B1**
(45) Date of publication and mention of the grant of the patent: **16.03.2022**
(21) Application number: 18830931.4
(22) Date of filing: 17.12.2018
(51) Int. Cl.: F16G 3/02, B29D 29/08, B65G 15/30, F16G 1/28

(54) **BELT**
GURT
COURROIE

(30) Priority: 20.12.2017 IT 201700146986
(43) Date of publication of application: 28.10.2020
(73) Proprietor: Plastorgomma S.R.L., 41042 Fiorano Modenese (MO) (IT)
(72) Inventor: LUSVARDI, Silvano, 41049 Sassuolo (Modena) (IT); MARCHIONI, Aurelio, 41049 Sassuolo (Modena) (IT)
(74) Representative: Gianelli, Luca
(86) International application number: PCT/IB2018/001436
(87) International publication number: WO 2019/122997

(56) References cited:
- EP-A1- 3 728 894
- US-A- 3 744 095
- US-A- 4 298 343
- US-A1- 2011 272 845

## Description

The object of the present invention relates to a belt, of the type used as a motion transmission means or as a transport means. There are many types of belts, which can be distinguished not only by the variety of materials of which they are made, but also mainly by the shape of their sections. Therefore, among the most common forms, we can define flat belts with a rectangular straight cross section, toothed belts, i.e. with at least one side provided with a transverse toothing, designed for gearing with corresponding toothed pulleys, and "V" or trapezoidal belts, specially designed to "work" with both their sides and the corresponding sides of the grooves made in special pulleys.

Normally the use of the belts provides for a closed loop configuration, to obtain which a head joint of the two opposite ends of a belt segment of a predetermined length must be provided.

In practice, a head joint is made between the ends of two different belt segments, simply to form a single belt of greater length. As is for example show in US 4 298 343 A.

In any case, it is necessary to make a head joint of the belts which, in most cases, are made of polyurethane or rubber.

In order to make the joint more resistant than that which can be made by simply merging the two edges to be joined, it is already envisaged that metal or other material pins are used, which are housed in the belt body in transverse holes previously provided by using special machines. These holes are made in the body of the belt, in a direction transverse to the median plane of the cross section, which includes the longitudinal axis of the belt itself, i.e. the axis along which the belt is pulled. To make sense of this operation the ends of the belt to be joined are die-cut to produce protruding portions and indentations in one belt, which are complementary with the protruding portions and recesses of the other belt, so as to be longitudinally connected by interlocking according to a preestablished pattern.

Once that the coupling has been made to snap into place in the flat link, transverse drilling is carried out in the thickness, at least in the joint section, for the insertion of the pins. This well-known technology including interlocking joints makes it possible to obtain a valid joint between the two ends, but through the use of a relatively complicated machining cycle, especially for the part concerning the drilling process, performed to obtain the transversal holes in which to insert the pins. In fact, the working cycle is relatively long and delicate, requiring high quality helical drills, generally cooled by cold air, and which, in many cases, are required to drill deep holes, and therefore characterized by a high length/diameter ratio. Due to the difficulty of the operation, frequent breakages can occur, which inevitably lead to lengthening of the working cycle. It should also be borne in mind that the drilling operation, because of its delicacy, requires appropriate equipment which is not suitable to be used with profit on belts that are packaged in customized length, and/or mounted directly at the place of use outside the workshop.

The main purpose of this invention is to overcome the limitations and disadvantages mentioned above, and those deriving therefrom, by providing a belt with transverse holes aimed at accommodating pins or reinforcing bars as a perfect fit, which are capable of forming a sort of reinforcement, particularly in belt joints.

An advantage of the invention is possible joining through the use of a reduced equipment, that can be used directly on site by an operator.

The invention, due to the advantage of facilitating and simplifying significantly the operation of joining and the consistent reduction of the total time of the processing cycle by the use of certain equipment, makes it possible to assemble and replace belts directly on site during ordinary and extraordinary maintenance operations. These and other objects and advantages are obtained by the present invention as described, illustrated in the enclosed drawings and claimed hereinafter.

The characteristics of the present invention will become more evident from the following description of some of its preferred embodiments illustrated by way of non-limiting example with the help of the enclosed figures, in which:
- Figure 1 shows a schematic perspective view of a first example;
- Figure 2 shows a schematic longitudinal cross section as viewed according to the X-X plane of the following figure 3;
- Figure 3 shows a schematic plan view from the top of Figure 2;
- Figure 4 shows a schematic longitudinal cross section as viewed according to the Y-Y plane of the following figure 5;
- Figure 5 shows a schematic plan view from the top of Figure 4;
- Figure 6 shows a schematic perspective view of a second embodiment shown in Figures 4 and 5;

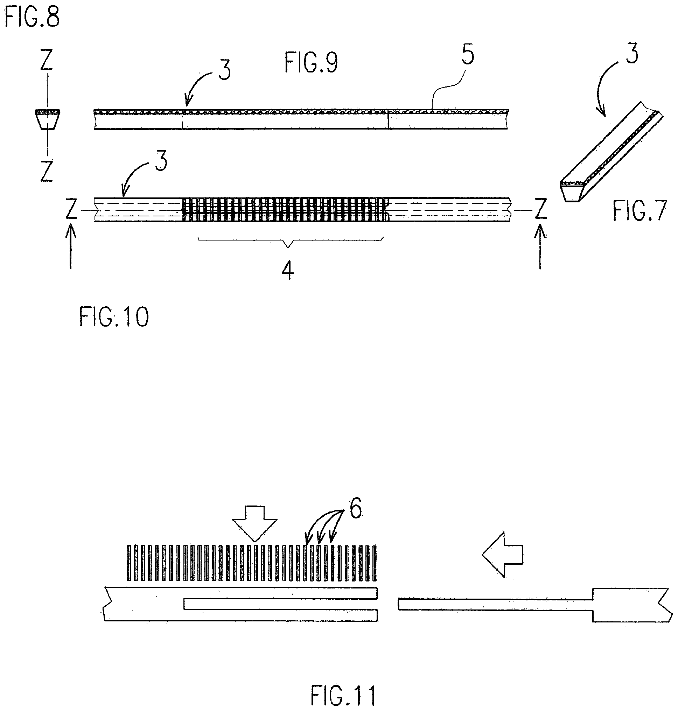

- Figure 7 shows a schematic perspective view of a further example shown in Figures 8, 9 and 10;
- Figure 8 shows a generic cross section of the following figure 9;
- Figure 9 shows a schematic cross section as viewed according to the Z-Z plane of the following figure 10;
- Figure 10 shows a schematic plan view from the top of Figure 9;
- Figure 11 shows a plan view from the top as the ones shown in Figure 10 in which the invention is represented in a step preceding the assembly of the components of the joint.

With reference to the attached Figures, with 1, 2 and 3 a total of a first, second and third belt have been indicated, constituting three embodiments, which have different conformations and cross sections. The belts are made of polyurethane or rubber or in any case an elastomeric material, conventionally used for the manufacture of transmission and transport belts.

The first example of a belt 1 is a fully flat belt. The second belt 2 is a toothed belt designed to gear with a toothed pulley. Belt 3 is an example of a V-belt, designed to operate in contact with the opposite sides of a special pulley with "V" grooves.

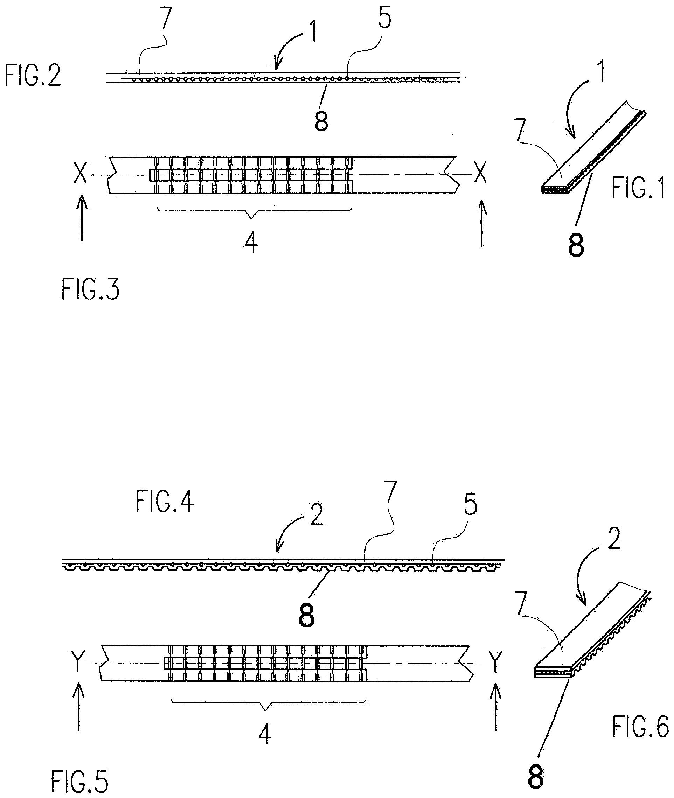

All three belts 1, 2, 3 represented, used as transmission components or as transport members, including other types of belts such as, for example, the double toothed belts, an example of which is shown in figure 4, are provided with a plurality of transverse holes 5.

In spite of their diversity, the belts, which are used as transmission member or as transport component, have a common characteristic. In fact, each of them has a plurality of transversal holes 5, parallel to each other or almost parallel to each other, which are located at the sides of the belts themselves.

The transverse holes 5 are obtained through the use of a toothed belt 8 on a toothed side of which a closing band or belt 7 is firmly arranged and coupled in a firm manner, with the task of covering the grooves between the teeth, thus forming a plurality of transversal holes 5. The latter are used to accommodate pins or pegs 6 thereinside, in a perfect fit, which are generally used as reinforcement elements arranged in correspondence to junction areas 4 of the belt.

The transverse holes 5 in-fact cross the thickness of the belts and are distributed neatly along the longitudinal extension of the same with transverse disposition with respect to the longitudinal median plane that is plane of symmetry and contains the geometric, longitudinal axis of the single belt, so composed of the firm joint between the band or closing belt 7 and the heads of the teeth of the same toothed belt 8, so as to close at top the groovesand so create the transverse holes 5.

In this way, in each of the belts 1, 2, 3, the transverse holes 5, in addition to being parallel to each other, have the same section. In addition, they pass through from one side to the opposite side of the single belt.

The transversal holes 5 are therefore straight, have the same section, are equi-distanced from each other and separated by a predetermined thickness according to the mechanical resistance characteristics desired for the belt.

In particular, they are specifically designed to house custom-made reinforcement pins or pegs 6, which are usually made of steel.

As already mentioned, the use of the transversal holes 5 of the belts 1, 2, 3 takes place through the insertion in them of the pins or pegs 6, in particular in the junction area of the belts.

This joint is frequently made at the head between two ends to be joined, which are specially prepared by performing a sort of "die-cutting" of the two ends to be joined, which consists in cutting shaped portions of the belt at both ends to be joined. These portions are arranged so that the externally protruding portions of the one belt are received in perfect fit in corresponding recesses between the protruding portions of the other belt, so as to form a sort of longitudinal joint, so that a junction area is defined.

Once the joint has been completed, working in such a way that the externally protruding portions of the one belt are accommodated in perfect fit in the corresponding recesses between the protruding portions of the other belt, so as to form a sort of longitudinal joint, the pins 6 can be introduces inside the holes 5 in correspondence with the junction zone 4. In this way, each pin 6 is inserted into sections of hole 5 belonging to the externally protruding portions of both ends of the belts.

The insertion of the pins 6 inside the holes 5 in the junction zone 4 gives a remarkable solidity and strength to the junction without jeopardizing its flexibility and increasing its resistance.

And this resistance can be further increased by subjecting at least the junction area 4 itself to an action of hot pressing, by virtue of which softening and/or melting of the belt material and subsequent cooling result in a consistent consolidation of the adhesion of the pins 6 to the material itself.

The advantage of this invention is that it provides a belt for the construction of which common toothed belts can be used in a simple manner.

The invention allows industrial production of belts with 5 holes for the proper insertion of the pins 6 in the junction areas in a simple way, so as to have a product, the belt, ready for the insertion of the transverse pins in the junction for the realization of which only an appropriate die-cutting is necessary.

## Claims

1. Belt, of the type used as a motion transmission means or as a transport means, **characterised in that** it comprises a plurality of parallel or almost parallel, transversal holes (5), which are orderly distributed along its longitudinal extension and are arranged at the sides of the belt itself (1, 2, 3), in the thickness of the same, and with an arrangement transverse to the median longitudinal plane (X-X;Y-Y;Z-Z) which contains the longitudinal geometric axis of the belt (1, 2, 3); said transversal holes (5) consisting of grooves between the teeth of the toothed part of a toothed belt (8) covered by a closing band or belt (7) firmly applied on the teeth heads to cover the grooves so as to generate the transversal holes (5), which are used to house correspondingly reinforcing pins or pegs (6) in the belt joint zones.

2. Belt according to claim 1, **characterised in that** said transversal holes (5) are through holes passing from one side to the opposite side of the belt itself.

3. Belt according to claim 1 or 2, **characterised in that** said transversal holes (5) are straight and have transversal dimensions which are identical to each other.

4. Belt according to claim 3, **characterised in that** said transversal holes (5) are equally spaced from each other and separated by a predetermined thickness according to the mechanical resistance characteristics desired for the belt.

5. Belt according to anyone of the previous claims, **characterised in that** it is obtained by using a toothed belt (8) on a toothed side of which a closing band or belt (7) is firmly arranged and coupled in a firm manner, with the task of covering the grooves between the teeth, thus forming a plurality of transversal holes (5) intended to receive pins 6 thereinside, arranged along a junction area (4).

## Patentansprüche

1. Riemen, einer Art, die als Mittel für die Übertragung einer Bewegung oder als Transportmittel, **dadurch gekennzeichnet, dass** er eine Vielzahl paralleler oder nahezu paralleler in Querrichtung verlaufender Löcher (5) aufweist, die in einer Reihe auf seiner Länge verteilt sind und an den Seiten dieses Riemens (1, 2, 3), in dessen Stärke sowie mit einer Positionierung quer zur mittleren Längsebene (X-X; Y-Y; Z-Z) angeordnet sind, die die geometrische Längsachse des Riemens (1, 2, 3) bildet; die genannten in Querrichtung verlaufenden Löcher (5) bestehend aus Nuten zwischen den Zähnen des gezahnten Teils eines Zahnriemens (8) und abgedeckt durch ein Verschlussband oder einen Riemen (7), der fest an den Zahnköpfen angebracht ist, um die Nuten abzudecken, damit die in Querrichtung verlaufenden Löcher (5) entstehen, die zur Aufnahme entsprechender Verstärkungsstifte oder -stäbe (6) in den Verbindungsbereichen des Riemens dienen.

2. Riemen gemäß Patentanspruch 1, **dadurch gekennzeichnet, dass** die genannten, in Querrichtung verlaufenden Löcher (5) von einer Seite des Riemens zur gegenüberliegenden durchgehen sind.

3. Riemen gemäß Patentanspruch 1 oder 2, **dadurch gekennzeichnet, dass** die genannten, in Querrichtung verlaufenden Löcher (5) schmal sind und zueinander identische Querabmessungen aufweisen.

4. Riemen gemäß Patentanspruch 3, **dadurch gekennzeichnet, dass** sich die genannten, in Querrichtung verlaufenden Löcher (5) in gleichem Abstand zueinander befinden und durch eine vorab festgelegte Stärke entsprechend der für den Riemen gewünschten Eigenschaften der mechanischen Widerstandsfähigkeit getrennt sind.

5. Riemen nach einem der vorangehenden Ansprüche, **dadurch gekennzeichnet, dass** er durch Verwendung eines Zahnriemens (8) erhalten wird, auf dessen gezahnter Seite ein Verschlussband oder -riemen (7) mit der Aufgabe fest angeordnet und verbunden ist, die Rillen zwischen den Zähnen abzudecken und so eine Vielzahl von in Querrichtung verlaufenden Löchern (5) zu bilden, die dazu bestimmt sind, darin Stifte (6) aufzunehmen, die entlang eines Verbindungsbereichs (4) angeordnet sind.

## Revendications

1. Courroie, du type utilisé comme un moyen de transmission de mouvement ou comme un moyen de transport, **caractérisée en ce qu'**elle comprend une pluralité d'orifices transversaux (5) placés en parallèle ou presque en parallèle, qui sont distribués de manière ordonnée le long de son extension longitudinale et sont agencés sur les côtés de la courroie elle-même (1, 2, 3), dans l'épaisseur de celle-ci, et avec un dispositif transversal au plan longitudinal médian (X-X;Y-Y;Z-Z) qui contient l'axe géométrique longitudinal de la courroie (1, 2, 3), lesdits orifices transversaux (5) consistant en rainures entre les dents de la partie dentée de la courroie dentée (8) couverte par une bande ou une courroie de fermeture (7) fermement appliquée sur les têtes des dents pour couvrir les rainures afin de générer les orifices transversaux (5), qui sont utilisés pour loger, de manière correspondante, des broches ou chevilles de renforcement (6) dans les zones de jonction de la courroie.

2. Courroie selon la revendication 1, **caractérisée en ce que** lesdits orifices transversaux (5) sont des orifices de passage passant d'un côté au côté opposé de la courroie elle-même.

3. Courroie selon la revendication 1 ou 2, **caractérisée en ce que** lesdits orifices transversaux (5) sont droits et ont des dimensions transversales qui sont identiques entre elles.

4. Courroie selon la revendication 3, **caractérisée en ce que** lesdits orifices transversaux (5) sont régulièrement espacés les uns des autres et séparés par une épaisseur prédéterminée en fonction des caractéristiques de résistance mécanique souhaitées pour la courroie.

5. Courroie selon l'une quelconque des revendications précédentes, **caractérisée en ce qu'**elle est obtenue en utilisant une courroie dentée (8) sur un côté denté de laquelle une bande ou courroie de fermeture (7) est fermement agencée et couplée d'une façon ferme, avec la tâche de couvrir les rainures entre les dents, formant ainsi une pluralité d'orifices transversaux (5) destinés à recevoir des broches (6) à l'intérieur, agencées le long d'une zone de jonction (4).
